# DEMANDE DE BREVET EUROPEEN

(11) **EP 1 675 130 A1**
(43) Date de publication de la demande: **28.06.2006**
(21) Numéro de dépôt: 05301089.8
(22) Date de dépôt: 20.12.2005
(51) Int. Cl.: H01B 1/24, C08L 27/18, B29D 23/00

(54) **Matériau électriquement conducteur à base de polymère fluoré et procédé de fabrication d'un tel matériau**

(30) Priorité: 22.12.2004 FR 0413765
(71) Demandeur: COMPAGNIE PLASTIC OMNIUM, 69007 Lyon (FR)
(72) Inventeur: Cade, David, 52200, Langres (FR)
(74) Mandataire: Leszczynski, André

(57) **Abrégé**

La présente invention concerne un matériau, notamment extrudé, par exemple sous la forme d'un ruban (5) ou un jonc cylindrique, le matériau étant électriquement conducteur, à base de polymère fluoré, notamment de PTFE, et contenant une charge conductrice à base de carbone choisie parmi : du noir de carbone, des nanotubes et des nanofibres de carbone.

## Description

La présente invention a pour objet un matériau conducteur à base de polymère fluoré, notamment de polytétrafluoroéthylène (PTFE), et un procédé de fabrication d'un tel matériau.

Habituellement, un ruban à base de PTFE peut contenir ou non une charge.

Dans le cas d'un ruban de PTFE vierge, la résistivité de surface est d'environ 1017 ohm/carré, le ruban étant alors totalement électriquement isolant.

Il est par ailleurs connu de réaliser un ruban à base de PTFE chargé avec du graphite. Ce type de ruban présente une conductivité électrique relativement médiocre.

La présente invention vise notamment à fournir un matériau, notamment sous la forme d'un ruban, à base de polymère fluoré, notamment de PTFE, qui présente des propriétés de conductivité électrique améliorées.

L'invention a ainsi pour objet un matériau, notamment extrudé, par exemple sous la forme d'un ruban ou un jonc cylindrique, le matériau étant électriquement conducteur, à base de polymère fluoré, notamment de PTFE, et contenant une charge conductrice à base de carbone choisie parmi : du noir de carbone, des nanotubes et des nanofibres de carbone.

Au sens de la présente invention, on entend par « nanotubes » et « nanofibres » des structures ayant un diamètre compris entre 1 et 104 nm, avec un rapport longueur/diamètre élevé, par exemple supérieur à 100.

Un tel matériau selon l'invention, avec une proportion appropriée de charge conductrice de carbone, présente des propriétés de conductivité électrique améliorées.

Lorsque la charge contient du noir de carbone, la proportion, en poids, de la charge conductrice dans le matériau est par exemple comprise sensiblement entre 2 % et 8 %, de préférence entre 3 % et 6 %, le PTFE se présentant sous forme de poudre fme. Cette proportion est notamment d'environ 5 %.

Lorsque la charge contient des nanotubes ou nanofibres de carbone et le PTFE se présente sous forme de poudre fine, la proportion en poids de la charge conductrice dans le matériau est par exemple comprise sensiblement entre 0,5 % et 10 %.

Avantageusement, la proportion de charge conductrice de carbone dans le matériau est choisie de manière à obtenir un matériau présentant une résistivité de surface sensiblement inférieure à 10⁸ ohm/carré, par exemple inférieure à 10⁵ ohm/carré, étant par exemple d'environ 10⁵ ohm/carré ou 10³ ohm/carré.

Dans un exemple de mise en oeuvre de l'invention, le matériau présente une structure monocouche.

L'invention a encore pour objet un procédé de fabrication d'un matériau, notamment sous la forme d'un ruban ou un jonc cylindrique, conducteur, à base de polymère fluoré, notamment de PTFE, le procédé comportant les étapes suivantes :
- fournir un mélange contenant un polymère fluoré, notamment du PTFE, de préférence sous forme de poudre fine, et une charge conductrice à base de carbone choisie parmi : du noir de carbone, des nanotubes et des nanofibres de carbone,
- former le matériau par extrusion lubrifiée du mélange.

La société déposante a constaté que l'extrusion lubrifiée appliquée à un mélange de PTFE avec une charge conductrice à base de carbone selon l'invention, dans des proportions appropriées en fonction notamment du grade du polymère fluoré, permet d'assurer, d'une part, des conditions d'extrusion satisfaisantes et, d'autre part, l'obtention d'un matériau présentant des propriétés électriques améliorées, en particulier une conductivité électrique relativement élevée, notamment plus élevée que la conductivité électrique d'un ruban de PTFE chargé avec du graphite.

Le PTFE dans le mélange est non fritté.

Dans un exemple de mise en oeuvre particulier de l'invention, on utilise comme charge du noir de carbone et la proportion, en poids, de la charge conductrice dans le mélange est par exemple comprise sensiblement entre 2 % et 8 %, de préférence entre 3% et 6 % pour du PTFE se présentant sous forme de poudre fine. Cette proportion est notamment d'environ 5 %.

Dans un exemple de mise en oeuvre de l'invention, l'extrusion est réalisée à l'aide d'une filière choisie pour obtenir à sa sortie un ruban extrudé avec une épaisseur comprise entre 30 et 500 µm, notamment entre 80 et 150 µm, par exemple d'environ 100 µm.

Le procédé peut comporter l'une au moins des étapes suivantes :
- soumettre le matériau extrudé à un calandrage,
- éliminer par séchage le lubrifiant dans le matériau extrudé,
- soumettre le matériau extrudé à une cuisson, par exemple lors de l'élimination du lubrifiant,
- éventuellement dédensifier le matériau extrudé, notamment par étirage.

L'invention a encore pour objet un procédé de fabrication d'un tube à base de matériau fluoré, le procédé comportant les étapes suivantes :
- enrouler sur un mandrin, suivant plusieurs couches, un ruban en un matériau défini ci-dessus,
- chauffer le ruban ainsi enroulé à une température supérieure à une température de gélification du matériau fluoré pendant une durée suffisante pour provoquer la gélification,
- refroidir le ruban,
- extraire du mandrin le tube formé par le ruban.

On peut se référer, en ce qui concerne la mise en oeuvre du procédé ci-dessus, à la demande EP 524 893.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente, schématiquement et partiellement, des étapes d'un procédé de fabrication d'un ruban conforme à l'invention, et
- la figure 2 illustre, schématiquement et partiellement, une étape de dédensification d'un ruban.

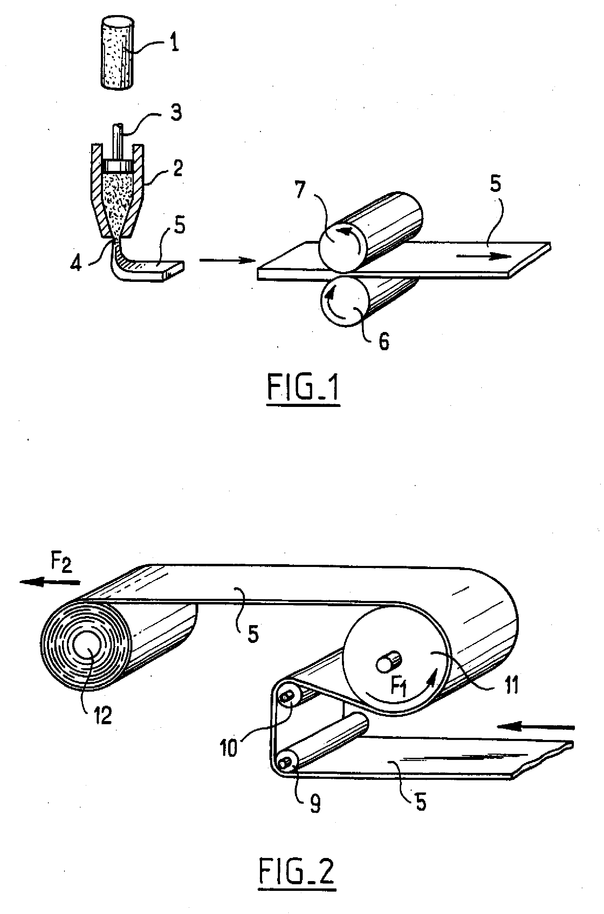

On va d'abord décrire en référence aux figures 1 et 2 différentes étapes d'un procédé de fabrication d'un matériau conducteur à base de PTFE conforme à l'invention.

On commence par préparer une préforme 1, par exemple de forme cylindrique, obtenue par compactage d'un mélange de PTFE non fritté, en poudre fine et de lubrifiant, incorporant également une charge conductrice à base de carbone.

La préforme 1 est introduite dans une presse de filage 2 dans laquelle un piston 3 refoule le mélange à travers une filière 4.

Dans l'exemple considéré, la filière 4, comportant notamment une fente, est choisie de manière à obtenir à sa sortie un matériau sous la forme d'un ruban plat 5 ayant une épaisseur comprise entre 30 et 500 µm, par exemple d'environ 100 µm.

La filière peut, en variante, être agencée pour permettre l'extrusion d'un jonc cylindrique.

Le ruban extrudé 5 peut ensuite être amené entre deux cylindres de calandrage 6 et 7 afm de réduire son épaisseur.

Dans une étape non illustrée, le ruban 5 est séché pour éliminer le lubrifiant.

Optionnellement, la densité du ruban 5 peut encore être réduite dans une étape illustrée à la figure 2, consistant à dédensifier ce ruban 5.

Durant cette étape, le ruban 5 est amené, par l'intermédiaire de rouleaux de renvoi 9, 10, sur un tambour 11 entraîné en rotation autour de son axe dans le sens de la flèche F₁.

Lorsque cela est nécessaire, le tambour 11 comporte un dispositif de chauffage permettant de maintenir sa surface extérieure à une température constante réglable.

Après passage sur le tambour 11, le ruban 5 peut être enroulé sur un noyau 12 associé à un dispositif d'entraînement non représenté, agencé pour que l'effort de traction F₂ exercé sur le ruban puisse être réglé à volonté.

On va maintenant décrire des exemples de mise en oeuvre du procédé selon l'invention.

### Exemple 1

Le mélange à extruder contient:
- Poudre de PTFE cru naturel : 100 parties en poids,
- Noir de carbone : 5 parties en poids,
- Lubrifiant Isopar (marque déposée) : entre 25 et 30 parties en poids.

La pression d'extrusion est de l'ordre de 40 à 100 bars.

La température d'extrusion est comprise entre 30 et 50°C.

Le ruban 5 obtenu présente une épaisseur d'environ 100 µm, une densité d'environ 1,5, et une résistivité de surface d'environ 10⁵ ohm/carré.

### Exemple 2 :

Le mélange à extruder contient :
- Poudre de PTFE cru naturel : 100 parties en poids,
- Charge à base de nanotubes de carbone : 0,5 partie en poids,
- Lubrifiant Isopar (marque déposée) : 25 parties en poids.

### Exemple 3 :

Le mélange à extruder contient :
- Poudre de PTFE cru naturel : 100 parties en poids,
- Charge à base de nanofibres de carbone : 1 partie en poids,
- Lubrifiant Isopar (marque déposée) : 25 parties en poids.

Bien entendu, il est possible d'utiliser tout autre lubrifiant approprié autre que celui indiqué dans les exemples ci-dessus.

## Revendications

1. Matériau, notamment extrudé, par exemple sous la forme d'un ruban (5) ou un jonc cylindrique, le matériau étant électriquement conducteur, à base de PTFE, et contenant une charge conductrice à base de noir de carbone, **caractérisé par le fait que** la proportion, en poids, de la charge conductrice dans le matériau est comprise sensiblement entre 3 % et 6 %, et **par le fait que** le PTFE se présente sous forme de poudre fme.

2. Matériau selon la revendication 1, **caractérisé par le fait que** le proportion, en poids, de la charge conductrice dans le matériau, est d'environ 5 %.

3. Matériau selon l'une des revendications 1 et 2, ayant la forme d'un ruban, **caractérisé par le fait que** l'épaisseur du matériau est comprise entre 80 et 150 µm.

4. Matériau selon l'une quelconque des revendications précédentes, **caractérisé par le fait que** la proportion de charge conductrice de carbone dans le matériau est choisie de manière à obtenir un matériau présentant une résistivité de surface sensiblement inférieure à 10⁸ ohm/carré, par exemple inférieure à 10⁵ ohm/carré, étant par exemple d'environ 10⁵ ohm/carré ou 10³ ohm/carré.

5. Matériau selon l'une quelconque des revendications précédentes, **caractérisé par le fait qu'**il présente une structure monocouche.

6. Procédé de fabrication d'un matériau selon l'une quelconque des revendications précédentes, le procédé comportant les étapes suivantes :
- fournir un mélange contenant un polymère fluoré, notamment du PTFE, et une charge conductrice à base de noir de carbone, ,
- former le matériau par extrusion lubrifiée du mélange.

7. Procédé selon la revendication 6, **caractérisé par le fait que** le mélange contient du PTFE sous forme de poudre fine.

8. Procédé selon la revendication 7, la charge étant du noir de carbone, **caractérisé par le fait que** la proportion, en poids, de la charge conductrice à base de carbone dans le mélange est comprise sensiblement entre 3 % et 6 %.

9. Procédé selon l'une quelconque des revendications 7 à 9, l'extrusion étant réalisée à l'aide d'une filière choisie pour obtenir à sa sortie un ruban extrudé avec une épaisseur comprise entre 30 et 500 µm, notamment entre 80 et 150 µm.

10. Procédé selon l'une quelconque des revendications 6 à 9, **caractérisé par le fait qu'**il comporte l'une au moins des étapes suivantes :
- soumettre le matériau extrudé à un calandrage,
- éliminer le lubrifiant dans le matériau extrudé,
- soumettre le matériau extrudé à une cuisson, par exemple lors de l'élimination du lubrifiant,
- éventuellement dédensifier le matériau extrudé, notamment par étirage.

11. Procédé de fabrication d'un tube à base de matériau fluoré, le procédé comportant les étapes suivantes :
- enrouler sur un mandrin, suivant plusieurs couches, un ruban en un matériau selon l'une quelconque des revendications 1 à 5,
- chauffer le ruban ainsi enroulé à une température supérieure à une température de gélification du matériau fluoré pendant une durée suffisante pour provoquer la gélification,
- refroidir le ruban,
- extraire du mandrin le tube formé par le ruban.
